# EUROPÄISCHE PATENTANMELDUNG

(11) **EP 4 462 524 A1**
(43) Veröffentlichungstag der Anmeldung: **13.11.2024**
(21) Anmeldenummer: 23173107.6
(22) Anmeldetag: 12.05.2023
(51) Int. Cl.: H01M 8/04014, H01M 8/04089, H01M 8/04111, H01M 8/04119, H01M 8/0438, H01M 8/04746

(54) **BRENNSTOFFZELLENSYSTEM UND BETRIEBSVERFAHREN FÜR BRENNSTOFFZELLE**

(71) Anmelder: 3prex AG, 8260 Stein am Rhein (CH)
(72) Erfinder: Skopil, Mario, 8260 Stein am Rhein (CH)
(74) Vertreter: Heyerhoff Geiger GmbH & Co. KG

(57) **Zusammenfassung**

Die vorliegende Erfindung betrifft ein Brennstoffzellensystem (1) und ein Betriebsverfahren (100) für eine Brennstoffzelle (20). Dabei ist eine mit einem Brennstoff (21) und einem Reaktanten (22) betreibbare Brennstoffzelle (20) vorgesehen. Außerdem ist eine Verdichtungsanordnung (30) vorgesehen, die dazu eingerichtet ist, einen Reaktantendruck des Reaktanten (22) anzuheben. Die Verdichtungsanordnung (30) weist einen in einem Zufuhrstrom (23) des Reaktanten (22) zur Brennstoffzelle (20) angeordneten Verdichter (31) auf. Erfindungsgemäß weist die Verdichtungsanordnung (30) zusätzlich einen im Zufuhrstrom (23) angeordneten Druckwellenlader (32) auf.

## Beschreibung

Die vorliegende Erfindung betrifft ein Brennstoffzellensystem und ein Betriebsverfahren für eine Brennstoffzelle.

Zum Betrieb einer Brennstoffzelle werden ein Brennstoff und ein Reaktant in eine mit zwei Elektroden bestückte Reaktionskammer eingeleitet. Als Brennstoff kann beispielsweise Wasserstoff zum Einsatz kommen. Als Reaktant kann beispielsweise Sauerstoff oder ein sauerstoffhaltiges Gas, zum Beispiel Luft, vorgesehen sein. Unter dem Begriff des Gases werden vorliegend auch Gasgemische verstanden. Der Wasserstoff wird an der als Anode fungierenden Elektrode oxidiert, während der Sauerstoff an der als Kathode fungierenden Elektrode reduziert wird. Die dabei frei werdende elektrische Energie lässt sich (zwischen-) speichern und/oder einem Elektroantrieb zuführen. Der oxidierte Wasserstoff und der reduzierte Sauerstoff reagieren abhängig von den Reaktionsbedingungen zu Wasser oder Wasserdampf. Das Wasser oder der Wasserdampf werden aus der Reaktionskammer abgeleitet.

Es ist bekannt, die Effizienz einer solchen Brennstoffzelle durch Verdichtung des Reaktanten vor Zuführung in die Reaktionskammer zu erhöhen. Die zur Verdichtung benötigte Energie kann von der beim Betrieb der Brennstoffzelle frei werdenden Energie abgezweigt werden. Betrachtet man den Wirkungsgrad der Brennstoffzelle, muss diese für die Verdichtung eingesetzte Energie berücksichtigt werden. Die Verdichtungsleistung beträgt üblicherweise etwa wenigstens 10 % der Brennstoffzellenleistung.

Es ist eine Aufgabe der vorliegenden Erfindung, den Wirkungsgrad einer Brennstoffzelle aufwandsgünstig zu erhöhen.

Diese Aufgabe wird gelöst durch ein Brennstoffzellensystem und ein Betriebsverfahren für eine Brennstoffzelle gemäß den unabhängigen Ansprüchen.

Weiterbildungen sind Gegenstand der abhängigen Unteransprüche und der folgenden Beschreibung.

Ein Brennstoffzellensystem gemäß einem ersten Aspekt der Erfindung weist eine mit einem Brennstoff und einem Reaktanten betreibbare Brennstoffzelle auf. Außerdem ist eine Verdichtungsanordnung vorgesehen, die dazu eingerichtet ist, einen Reaktantendruck des Reaktanten anzuheben. Die Verdichtungsanordnung weist einen in einem Zufuhrstrom des Reaktanten zur Brennstoffzelle angeordneten Verdichter auf. Erfindungsgemäß weist die Verdichtungsanordnung zusätzlich einen im Zufuhrstrom angeordneten Druckwellenlader auf.

Ein Verdichter im Sinne der Erfindung ist vorzugsweise eine Vorrichtung zum Verdichten eines Gases. Ein Verdichter ist zweckmäßigerweise als Turboverdichter ausgebildet, bei dem ein schnell rotierender Rotor einem den Verdichter durchströmenden Gas Energie zusetzt, insbesondere dessen Dichte erhöht. Ein solcher Turboverdichter ist vorzugsweise als Radialverdichter ausgebildet. Andere Varianten, zum Beispiel als Axialverdichter, sind aber ebenfalls denkbar.

Ein Druckwellenlader im Sinne der Erfindung ist vorzugsweise eine Vorrichtung zum Verdichten eines Gases mithilfe eines Arbeitsmediums. Solche Druckwellenlader sind beispielsweise aus WO 2016/012582 A1 oder WO 2016/012585 A1 bekannt. Das Arbeitsmedium ist zweckmäßigerweise ein enthalpiereiches Gas. Das bedeutet, dass das Arbeitsmedium eine im Vergleich zum zu komprimierenden Gas hohe innere Energie und/oder einen im Vergleich zum zu komprimierenden Gas hohen Druck aufweist. Die hohe innere Energie kann beispielsweise mittels einer hohen Temperatur des Arbeitsmediums realisiert werden. Der Druckwellenlader ist vorzugsweise zur Druckübertragung zwischen dem zu verdichtenden Gas und dem Arbeitsmedium eingerichtet. Zu diesem Zweck weist der Druckwellenlader ein Zellenrad auf.

Das Arbeitsprinzip eines Druckwellenladers beruht darauf, dass einzelne oder mehrere Zellen des Zellenrades, welche zu verdichtendes Gas enthalten, infolge einer Rotation des Zellenrades an einer arbeitsmediumseitigen Einlassöffnung vorbeigeführt werden, sodass Arbeitsmedium in eine einzelne oder mehreren Zellen einströmt und das zu verdichtende Gas komprimiert. Im weiteren Rotationsverlauf des Zellenrades werden die einzelne oder mehreren Zellen des Zellenrades, welche nunmehr das zu verdichtende Gas in komprimierter Form enthalten, an einer frischgasseitigen Auslassöffnung vorbeigeführt, sodass das verdichtete Gas ausströmen kann. Durch eine hinreichend schnelle Weiterrotation des Zellenrades kann vermieden werden, dass neben dem verdichteten Gas auch das Arbeitsmedium aus der frischgasseitigen Auslassöffnung ausströmt. Stattdessen trifft dieses auf eine Wandung, wird reflektiert und strömt durch eine arbeitsmediumseitige Auslassöffnung aus. Dieses Ausströmen bei vergleichsweise hoher Geschwindigkeit ermöglicht es, durch eine frischgasseitige Einlassöffnung frisches, zu verdichtendes Gas anzusaugen, welches im nächsten Zyklus verdichtet werden kann. Um die beschriebenen gasdynamischen Vorgänge zu realisieren, müssen die genannten Einlass- und Auslassöffnungen geeignet angeordnet und eine Drehzahl des Zellenrades darauf abgestimmt werden. Dies wird vorliegend als Drehzahlsynchronisation des Zellenrades bezeichnet.

Ein Aspekt der Erfindung beruht auf dem Ansatz, zusätzlich zu einem konventionellen Verdichter einen Druckwellenlader zum Verdichten eines Reaktanten vor dessen Einspeisung in eine Brennstoffzelle vorzusehen. Zum Beispiel kann der teilweise auch als Comprex bezeichnete Druckwellenlader zusätzlich zu einem als Radialverdichter ausgebildeten Turboverdichter in einem Zufuhrstrom des Reaktanten zur Brennstoffzelle vorgesehen sein. Mithilfe einer derartigen Verdichtungsanordnung kann ein Reaktantendruck des Reaktanten vor der Einspeisung in die Brennstoffzelle auf ein Betriebsdruckniveau angehoben werden, bei dem die Brennstoffzelle besonders effizient betreibbar ist. Der Einsatz des Druckwellenladers ermöglicht dabei eine signifikante Reduzierung der zur Verdichtung des Reaktanten benötigten Leistung. Insbesondere lässt sich die zum Betrieb der den Verdichter und den Druckwellenlader umfassenden Verdichtungsanordnung benötigte Leistung auf weniger als 10 % der von der Brennstoffzelle erzeugbaren Leistung verringern. Gegenüber konventionellen Brennstoffzellensystemen, in denen lediglich ein (konventioneller) Verdichter vorgesehen ist, ist so ein effizienterer Betrieb der Brennstoffzelle möglich.

Dadurch, dass zusätzlich ein Druckwellenlader vorgesehen ist, muss der Verdichter nicht mehr die gesamte Verdichtungsarbeit leisten. Folglich kann beim Betrieb des Verdichters Energie eingespart werden. Aufgrund der Wirkweise des Druckwellenladers und des damit verbundenen hohen Wirkungsgrads kann eine restliche - zum Beispiel eine zum Erreichen des Betriebsdruckniveaus der Brennstoffzelle noch fehlende - Verdichtungsarbeit von dem Druckwellenlader bei geringem Leistungseinsatz verrichtet werden. Mit anderen Worten kann bei Verrichtung derselben Verdichtungsarbeit die benötigte elektrische Leistung der Verdichtungsanordnung mit (konventionellem) Verdichter und Druckwellenlader kleiner sein als die benötigte elektrische Leistung einer Verdichtungsvorrichtung, welche allein einen (konventionellen) Verdichter vorsieht. Die zum Verdichten des Reaktanten notwendige Leistung kann also verringert werden. Der Wirkungsgrad der Brennstoffzelle kann folglich mit verringertem Leistungsaufwand erhöht werden.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform ist die Verdichtungsanordnung zweistufig ausgebildet. Vorzugsweise weist das Brennstoffzellensystem, insbesondere die Verdichtungsanordnung, eine erste Verdichterstufe auf, die zum Anheben des Reaktantendrucks auf ein erstes Druckniveau eingerichtet ist. Vorzugsweise weist das Brennstoffzellensystem auch eine zweite Verdichterstufe auf, die zum Anheben des Reaktantendrucks auf ein zweites Druckniveau, das höher ist als das erste Druckniveau, eingerichtet ist. Insofern lässt sich mithilfe der ersten und zweiten Verdichterstufe eine gestufte, d. h. schrittweise, Druckerhöhung des Reaktanten vor Einspeisung in die Brennstoffzelle erzielen. Die erste Verdichterstufe kann den Reaktantendruck beispielsweise von einem Umgebungsdruck (Normaldruck) auf das erste Druckniveau anheben. Die zweite Verdichterstufe kann den Reaktantendruck dann vom ersten Druckniveau auf das zweite Druckniveau, insbesondere das Betriebsdruckniveau der Brennstoffzelle, anheben. Durch das Vorsehen der ersten und zweiten Verdichterstufe kann im optimalen Wirkungsgradbereich sowohl des Druckwellenladers als auch des Verdichters gearbeitet werden.

Die erste Verdichterstufe entspricht zweckmäßigerweise einer Niederdruckstufe. Die zweite Verdichterstufe entspricht zweckmäßigerweise einer Hochdruckstufe. Insofern kann der Reaktantendruck mittels der Verdichtungsanordnung zunächst auf ein erstes Druckniveau (Niederdruckniveau) und anschließend auf ein zweites Druckniveau (Hochdruckniveau) gehoben werden.

Der Druckwellenlader ist vorzugsweise Teil der ersten Verdichterstufe zum Anheben des Reaktantendrucks auf das erste Druckniveau. Weiter vorzugsweise ist der Verdichter Teil der zweiten Verdichterstufe zum Anheben des Reaktantendrucks auf das zweite Druckniveau. Insofern kann der Druckwellenlader die Niederdruckstufe bilden, während der Verdichter die Hochdruckstufe bildet. Das Vorsehen des Verdichters als Teil der zweiten Verdichterstufe und des Druckwellenladers als Teil der ersten Verdichterstufe kann besonders aufwandsarm und damit effizient erfolgen, da so der Druckwellenlader gegenüber einer Anordnung im Zufuhrstrom stromabwärts des Verdichters bei einem geringeren Druckverhältnis arbeiten kann.

Alternativ ist der Verdichter Teil der ersten Verdichterstufe zum Anheben des Reaktantendrucks auf das erste Druckniveau. Weiter vorzugsweise ist der Druckwellenlader Teil der zweiten Verdichterstufe zum Anheben des Reaktantendrucks auf das zweite Druckniveau, welches höher ist als das erste Druckniveau. Insofern kann der Verdichter die Niederdruckstufe bilden, während der Druckwellenlader die Hochdruckstufe bildet. Somit kann der Verdichter bei geringeren Drücken und damit energiesparender arbeiten. Infolgedessen lässt sich durch die Anordnung des Verdichters stromaufwärts des Druckwellenladers im Zufuhrstrom des Reaktanten zur Brennstoffzelle die Effizienz des Brennstoffzellensystems noch weiter erhöhen.

In einer weiteren bevorzugten Ausführungsform ist eine Abfuhrleitung zum Abführen eines im Betrieb der Brennstoffzelle entstehenden Abgases vorgesehen. Zweckmäßigerweise ist mithilfe der Abfuhrleitung das Abgas dem Druckwellenlader als Arbeitsmedium zur Anhebung des Reaktantendrucks, insbesondere vom ersten Druckniveau auf das zweite Druckniveau, zuführbar. Dadurch kann zumindest ein Teil der Enthalpie des Abgases, insbesondere dessen Wärme und dessen Druck, genutzt werden, um den Reaktanten vor der Einspeisung in die Brennstoffzelle zu verdichten. Hierbei erweist es sich als besonders vorteilhaft, dass der Druckwellenlader, im Gegensatz zu konventionellen Turbinen, das Abgas selbst bei geringen Abgastemperaturen von beispielsweise etwa 300 °C noch effizient nutzen kann. Dies beruht auf einer unmittelbaren Nutzung des Abgases zur Verdichtung des Reaktanten. Folglich kann der Wirkungsgrad des Brennstoffzellensystems weiter erhöht werden; und zwar über das Maß hinaus, das erreichbar wäre durch eine Nutzung der Abgasenergie allein durch eine zum Antrieb des Verdichters eingesetzte Turbine.

Die Abfuhrleitung kann beispielsweise einen ersten Verbindungsabschnitt aufweisen, der einen Abgasauslass der Brennstoffzelle mit einem Abgaseinlass des Druckwellenladers gasleitend verbindet. Dadurch kann Abgas der Brennstoffzelle direkt dem Druckwellenlader zugeführt werden.

In einer weiteren bevorzugten Ausführungsform weist das Brennstoffzellensystem eine mit Abgas der Brennstoffzelle beaufschlagbare Turbine auf. Die Turbine ist zweckmäßigerweise derart mit dem Verdichter gekoppelt, dass der Verdichter mittels der Turbine antreibbar ist. Beispielsweise können der Verdichter und die Turbine über eine Welle und/oder ein Getriebe gekoppelt sein. Die zum Betrieb des Verdichters benötigte Energie kann dadurch zumindest teilweise aus dem Abgas gezogen werden. Auf diese Weise lässt sich der Wirkungsgrad des Brennstoffzellensystems weiter erhöhen.

Eine Turbine im Sinne der Erfindung ist vorzugsweise eine Vorrichtung zur Umwandlung von innerer Energie eines Arbeitsmediums, insbesondere eines enthalpiereichen Gases, in eine Rotationsbewegung. Die Turbine kann beispielsweise als Expanderturbine ausgebildet sein.

Zum Beaufschlagen der Turbine mit dem Abgas ist die Turbine zweckmäßigerweise an die Abfuhrleitung angeschlossen. Insbesondere kann das Abgas der Brennstoffzelle der Turbine mithilfe der Abfuhrleitung zuführbar sein. Insbesondere kann aus dem Druckwellenlader austretendes Abgas mithilfe der Abfuhrleitung der Turbine zuführbar sein. Die Abfuhrleitung kann beispielsweise einen zweiten Verbindungsabschnitt aufweisen, die einen Abgasauslass des Druckwellenladers gasleitend mit einem Abgaseinlass der Turbine verbindet. In diesem Fall kann die im Abgas der Brennstoffzelle enthaltene Energie sowohl vom Druckwellenlader als auch vom Verdichter genutzt werden. Auf diese Weise lässt sich zumindest ein Teil der im Abgas nach dem Durchströmen des Druckwellenladers noch vorhandenen Energie zum Betrieb des Verdichters nutzen, was eine besonders effiziente Nutzung des Abgases darstellt. Alternativ kann der zweite Verbindungsabschnitt aber auch einen Abgasauslass der Brennstoffzelle direkt mit dem Abgaseinlass der Turbine verbinden. In diesem Fall lässt sich gegebenenfalls ein größerer Teil der im Abgas enthaltenen Energie zum Betrieb des Verdichters einsetzen.

In einer weiteren bevorzugten Ausführungsform weist das Brennstoffzellensystem, insbesondere die erste Verdichterstufe, eine im Zufuhrstrom zwischen dem Verdichter und dem Druckwellenlader angeordnete Kühlvorrichtung auf. Die Kühlvorrichtung ist zweckmäßigerweise dazu eingerichtet, den durch den Verdichter oder den Druckwellenlader vorverdichteten Reaktanten vor einer als Nachverdichtung bezeichneten weiteren Verdichtung zu kühlen. Die Nachverdichtung kann insbesondere in der zweiten Verdichterstufe erfolgen. Infolge des beschriebenen Kühlens kann der Verdichter oder Druckwellenlader, mit dem die weitere Verdichtung vornehmbar ist oder vorgenommen wird, in einem Wirkungsgradoptimum betrieben werden. Mit anderen Worten kann der thermodynamische Zustand des vorverdichteten Reaktanten mithilfe der Kühlvorrichtung so angepasst werden, dass die Nachverdichtung effizienter durchführbar ist.

Es kann beispielsweise eine Zufuhrleitung zur Versorgung der Brennstoffzelle mit dem Reaktanten, das heißt zum Führen des Zufuhrstroms des Reaktanten zur Brennstoffzelle, vorgesehen sein. Die Kühlvorrichtung ist dann zweckmäßigerweise in einem ersten Verbindungsabschnitt der Zufuhrleitung zwischen der ersten und zweiten Verdichterstufe angeordnet.

Insofern die Kühlvorrichtung den Reaktantendruck beeinflusst, kann die Kühlvorrichtung Teil der ersten Verdichterstufe sein. Beispielsweise können der Verdichter und die Kühlvorrichtung derart eingerichtet, insbesondere aufeinander abgestimmt, sein oder betrieben werden, dass der Reaktantendruck beim Durchströmen der Kühlvorrichtung auf das erste Druckniveau angehoben wird oder sich jedenfalls stromabwärts der Kühlvorrichtung in der Zufuhrleitung vor dem Druckwellenlader auf dem ersten Druckniveau befindet. Alternativ können der Verdichter und die Kühlvorrichtung aber auch derart eingerichtet, insbesondere aufeinander abgestimmt, sein oder betrieben werden, dass der Reaktant die Kühlvorrichtung nach Erreichen des ersten Druckniveaus durchströmt.

In einer weiteren bevorzugten Ausführungsform ist ein im Zufuhrstrom angeordnetes Steuergebläse vorgesehen, welches zum Beeinflussen des Zufuhrstroms zwischen dem Druckwellenlader und der Brennstoffzelle eingerichtet ist. Das Steuergebläse ist dazu vorzugsweise stromabwärts des Druckwellenladers im Zufuhrstrom angeordnet und kann insbesondere an die Zufuhrleitung angeschlossen sein. Das Steuergebläse kann insbesondere im zweiten Verbindungsabschnitt der Zufuhrleitung zwischen dem Druckwellenlader und der Brennstoffzelle angeordnet sein. Folglich lässt sich mithilfe des Steuergebläses ein definierter thermodynamischer Zustand des Reaktanten vor Eintritt in die Brennstoffzelle einstellen, beispielsweise ein definierter Druck und/oder ein definierter Mengenstrom. Im Zusammenspiel mit dem Druckwellenlader und dem im Zufuhrstrom stromaufwärts des Druckwellenladers angeordneten Verdichter lässt sich mittels des Steuergebläses auch ein definierter Feuchtigkeitsgehalt im Zufuhrstrom einstellen, wie weiter unten noch ausführlicher erläutert wird.

Das Steuergebläse kann insbesondere zum Nachverdichten des aus dem Druckwellenlader strömenden Reaktanten eingerichtet sein. Dabei beträgt das Verhältnis des Reaktantendrucks nach dem Steuergebläse zum Reaktantendruck vor dem Steuergebläse bevorzugt maximal 1,1. Die Nachverdichtung durch das Steuergebläse kann also klein ausfallen, insbesondere im Verhältnis zur Druckerhöhung durch den Verdichter und den Druckwellenlader. Dies wird bevorzugt, um den Energiebedarf des Steuergebläses gering halten zu können.

Insofern das Steuergebläse den Reaktantendruck beeinflusst, kann das Steuergebläse Teil der zweiten Verdichterstufe sein. Beispielsweise können der Druckwellenlader und das Steuergebläse derart eingerichtet, insbesondere aufeinander abgestimmt, sein oder betrieben werden, dass der Reaktantendruck beim Durchströmen des Steuergebläses auf das zweite Druckniveau angehoben wird oder sich jedenfalls stromabwärts des Steuergebläses in der Zufuhrleitung vor der Brennstoffzelle auf dem zweiten Druckniveau befindet. Alternativ können der Druckwellenlader und das Steuergebläse derart eingerichtet, insbesondere aufeinander abgestimmt, sein oder betrieben werden, dass der Reaktant das Steuergebläse nach Erreichen des zweiten Druckniveaus durchströmt.

Alternativ oder zusätzlich kann das Steuergebläse auch dazu eingerichtet sein, eine Durchströmrichtung des Zufuhrstroms durch den Druckwellenlader beim Anfahren des Druckwellenladers vorzugeben. Folglich kann mittels des Steuergebläses die ordnungsgemäße Arbeitsweise des Druckwellenladers sichergestellt werden.

In einer weiteren bevorzugten Ausführungsform ist eine Steuerungsvorrichtung vorgesehen, die dazu eingerichtet ist, den Druckwellenlader und/oder das Steuergebläse und/oder den Verdichter zum selektiven Beimischen von Abgas der Brennstoffzelle in den Zufuhrstrom zu veranlassen, und zwar insbesondere über den Druckwellenlader. Mit anderen Worten kann dem Zufuhrstrom Abgas der Brennstoffzelle selektiv, das heißt in einem vorgegebenen Maß, beigemischt werden, indem der Druckwellenlader und/oder das Steuergebläse und/oder der Verdichter von einer Steuerungsvorrichtung entsprechend angesteuert wird. Der Druckwellenlader dient dabei zweckmäßigerweise als Schnittstelle zwischen dem Zufuhrstrom und dem Abgasstrom. Die dem Zufuhrstrom beizumischende Abgasmenge oder die Rate, mit der das Abgas dem Zufuhrstrom beigemischt wird, ist dadurch präzise und aufwandsarm einstell- oder vorgebbar.

Eine Beimischung von Abgas in den Zufuhrstrom ist oftmals wünschenswert, wenn eine im Abgas enthaltene Substanz zum Betrieb der Brennstoffzelle notwendig ist, die Betriebseffizienz erhöht oder die Lebensdauer der Brennstoffzelle verlängert. Beim Einsatz von Wasserstoff als Brennstoff und Sauerstoff oder Luft als Reaktant kann der in der Brennstoffzelle entstehende Wasserdampf (als Abgas) beispielsweise dazu genutzt werden, eine Membran, die verschiedene Elektrolyten in der Brennstoffzelle voneinander trennt, zu befeuchten.

Die Nutzung des Druckwellenladers und/oder des Steuergebläses und/oder des Verdichters zum Beimischen von Abgas in den Zufuhrstrom erlaubt insofern die Regelung eines Feuchtigkeitsgehalts in der Brennstoffzelle, insbesondere die Befeuchtung einer Membran der Brennstoffzelle, ohne dass zusätzliche Armaturen wie zum Beispiel Abgasrückführventile oder Abgasdruckerhöhungsgebläse, wie sie in konventionellen Systemen eingesetzt werden, notwendig sind.

In einer bevorzugten Ausführungsform ist die Steuerungsvorrichtung dazu eingerichtet, eine Förderleistung des Steuergebläses und/oder des Verdichters, insbesondere ein Leistungsverhältnis zwischen der Leistung des Verdichters und der Leistung des Steuergebläses, einzustellen. Beispielsweise kann die Steuerungsvorrichtung die Leistung des Verdichters verringern und/oder die Leistung des Steuergebläses erhöhen. Dadurch lässt sich die Menge an pro Zeiteinheit vom Steuergebläse bzw. dem Verdichter gefördertem Reaktant einstellen. Folglich kann die Einstellung der Steuergebläse- und/oder Verdichterleistung als Einstellung der Förderleistung verstanden werden.

Erhöht sich die Fördermenge des stromaufwärts angeordneten Steuergebläses gegenüber der Fördermenge des stromabwärts angeordneten Verdichters, "drückt" das Steuergebläse also mehr Reaktant durch die Zufuhrleitung, als der Verdichter nachliefert, kann über den im Zufuhrstrom zwischen dem Steuergebläse und dem Verdichter angeordneten Druckwellenlader Abgas aus dem Abgasstrom in den Zufuhrstrom einströmen. Folglich kann durch eine Verstimmung der Leistungen des Steuergebläses und des Verdichters bzw. der damit korrespondierenden Fördermengen pro Zeiteinheit, d. h. der Förderströme, gezielt Abgas aus dem Abgasstrom über den Druckwellenlader in den Zufuhrstrom beigemischt werden. Mittels der Einstellung der Leistungen von Steuergebläse und Verdichter bzw. damit korrespondierender Fördermengen lässt sich somit gezielt eine Rezirkulation zumindest eines Teils des Abgases über die zweite Verdichterstufe, d. h. die Hochdruckstufe, zurück zur Brennstoffzelle erreichen.

Es hat sich gezeigt, dass die Regelung des Feuchtigkeitsgehalts im Zufuhrstrom durch gezieltes Einstellen der relativen Leistung von Steuergebläse und Verdichter bzw. der relativen Fördermengen sehr zuverlässig funktionieren kann. Insbesondere lässt sich so eine sehr zuverlässige und aufwandsarme Regelung des Feuchtigkeitsgehalts erreichen, da die Leistung des Steuergebläses und des Verdichters unkompliziert und präzise, etwa mittels eines durch die Steuerungseinrichtung gesteuerten Frequenzumformers an einem Steuergebläseantrieb und/oder Verdichterantrieb, eingestellt werden kann.

In einer weiteren bevorzugten Ausführungsform ist die Steuerungsvorrichtung dazu eingerichtet, die Drehzahl des Zellenrades gegenüber dem drehzahlsynchronisierten Zustand des Zellenrades kontrolliert zu verstimmen. Dies kann in vorteilhafter Weise durch das Ändern der Drehzahl des Zellenrads des Druckwellenladers erzielt werden. Die Verstimmung der Drehzahl des Zellenrads des Druckwellenladers gegenüber dem drehzahlsynchronisierten Zustand ermöglicht es, dass ein Teil des Abgases zusammen mit dem verdichteten Reaktanten aus dem Zellenrad ausströmen und in den Zufuhrstrom gelangen kann. Die beschriebene Verstimmung der Drehzahl des Zellenrads des Druckwellenladers bietet eine einfache Möglichkeit, den Feuchtigkeitsgehalt im Reaktanten ausschließlich mittels des Druckwellenladers aufwandsarm zu steuern oder zu regeln.

Daher ist die Steuerungsvorrichtung in einer Ausführungsform dazu eingerichtet, die Drehzahl des Zellenrads des Druckwellenladers um ein vorgegebenes Maß zu ändern. Zu diesem Zweck ist die Steuerungseinrichtung vorzugweise mit einem Druckwellenladerantrieb, zum Beispiel einer Motoreinheit des Druckwellenladers, signal- oder datenverbunden. Dadurch kann die Steuerungsvorrichtung den Druckwellenladerantrieb zur Regelung der Drehzahl des Zellenrads ansteuern. Die Änderung der Drehzahl des Zellenrads bietet eine alternative Möglichkeit, zumindest einen Teil des Abgases dem Reaktanten beizumischen. Abhängig von der dem Zufuhrstrom beizumischenden Abgasmenge kann die Verstimmung der Drehzahl des Druckwellenladers durchgeführt werden, ohne dass dadurch der Wirkungsgrad des Druckwellenladers signifikant beeinflusst wird.

Die beschriebene Verstimmung der Drehzahl des Zellenrads gegenüber dem drehzahlsynchronisierten Zustand des Zellenrads lässt sich auch durch eine Verzögerung des Ausströmens des Abgases aus dem Druckwellenlader erreichen. Diese bewirkt, dass der zu verdichtende Reaktant in einer reduzierten Menge angesaugt wird, was zu der angestrebten Verstimmung führt. Alternativ oder zusätzlich kann daher auch eine in einem Abfuhrstrom des Abgases stromabwärts des Druckwellenladers angeordnete Abgasdrossel vorgesehen sein. Die Steuerungsvorrichtung ist vorzugsweise dazu eingerichtet, die Abgasdrossel zum Drosseln des Abfuhrstroms zu veranlassen, um das Ausströmen des Abgases aus dem Druckwellenlader zu verzögern und damit eine Verstimmung der Drehzahl des Zellenrads gegenüber dem drehzahlsynchronisierten Zustand des Zellenrads herbeizuführen. Zu diesem Zweck ist die Steuerungsvorrichtung vorzugsweise mit der Abgasdrossel oder einem zur Betätigung der Abgasdrossel eingerichteten Aktuator signal- oder datenverbunden. Die Regelung einer Verstimmung durch die Drosselung des Abfuhrstromes kann unter Umständen einfacher sein und präziser erfolgen als eine Drehzahlregelung des Zellenrads.

Eine solche Abgasdrossel kann beispielsweise an einem Abgasauslass des Druckwellenladers vorgesehen sein. Insbesondere kann die Abgasdrossel im zweiten Verbindungsabschnitt der Abfuhrleitung angeordnet sein. Alternativ kann die Abgasdrossel aber auch im Abgasstrom stromabwärts der Turbine angeordnet sein. So lässt sich mittels der Abgasdrossel auch ein Ladedruck für die Turbine aufstauen. Dies ist unter Umständen aufwandsärmer und kostengünstiger, als eine Turbine mit variable Turbinengeometrie (VTG-Turbine) einzusetzen, die den Ladedruck selbstständig regulieren kann.

In einer weiteren bevorzugten Ausführungsform ist die erste Verdichterstufe, insbesondere der Verdichter, dazu eingerichtet, den Reaktantendruck auf ein erstes Druckniveau von wenigstens 1 bar, vorzugsweise wenigstens 1,5 bar, besonders bevorzugt etwa 1,8 bar, anzuheben. Die vom Druckwellenlader benötigte Energie für die anschließend noch auszuführende restliche Verdichtungsarbeit kann dadurch einem Arbeitsmedium mit beschränktem Enthalpiegehalt, zum Beispiel mit einer Temperatur von nur etwa 300 °C, entnommen werden. Insofern kann durch die Vorverdichtung auf wenigstens 1 bar beispielsweise die im Abgas der Brennstoffzelle enthaltene Energie genutzt werden.

Um einen übermäßigen Energieeinsatz bei der Verdichtung in der ersten Verdichterstufe und damit das Arbeiten bei einem ungünstigen Wirkungsgrad vermeiden zu können, ist die erste Verdichterstufe zweckmäßigerweise dazu eingerichtet, den Reaktantendruck auf ein erstes Druckniveau von höchstens 2,2 bar, vorzugsweise höchstens 2 bar, besonders bevorzugt etwa 1,8 bar, anzuheben.

Es hat sich gezeigt, dass für einen besonders effizienten Betrieb der Brennstoffzelle ein Reaktantendruck von wenigstens 2,0 bar, besser 2,2 bar oder sogar 2,4 bar, erreicht werden sollte. In Anbetracht der durch die erste Verdichterstufe vorteilhaft erreichbaren Druckniveaus, die voranstehend beschrieben sind, ist die zweite Verdichterstufe, insbesondere der Druckwellenlader, infolgedessen vorteilhafterweise dazu eingerichtet, den Reaktantendruck auf ein zweites Druckniveau von mindestens 2 bar, vorzugsweise mindestens 2,2 bar, besonders bevorzugt etwa 2,4 bar, anzuheben. Dabei ist es besonders vorteilhaft, wenn die zweite Verdichterstufe den Reaktantendruck vom ersten Druckniveau zwischen 1 bar und 2,2 bar, vorzugsweise zwischen 1,5 bar und 2 bar, besonders bevorzugt etwa 1,8 bar, auf das zweite Druckniveau anhebt.

Um jedoch einen unerwünschten Überdruck in der Brennstoffzelle vermeiden zu können, ist die zweite Verdichterstufe vorteilhafterweise dazu eingerichtet, den Reaktantendruck auf ein zweites Druckniveau von höchstens 2,8 bar, vorzugsweise höchstens 2,6 bar, besonders bevorzugt etwa 2,4 bar, anzuheben. Dabei ist es besonders vorteilhaft, wenn die zweite Verdichtersstufe den Reaktantendruck vom ersten Druckniveau zwischen 1 bar und 2,2 bar, vorzugsweise zwischen 1,5 bar und 2 bar, besonders bevorzugt etwa 1,8 bar, auf das zweite Druckniveau anhebt.

Bei einem Betriebsverfahren für eine Brennstoffzelle gemäß einem zweiten Aspekt der Erfindung wird ein Reaktantendruck eines Reaktanten in einem Zufuhrstrom zu einer Brennstoffzelle mittels einer Verdichtungsanordnung, welche einen im Zufuhrstrom angeordneten Verdichter und zusätzlich einen im Zufuhrstrom angeordneten Druckwellenlader aufweist, erhöht. Vorzugsweise wird der Reaktantendruck dabei stufenweise erhöht, zum Beispiel auf ein gewünschtes Betriebsdruckniveau der Brennstoffzelle. So ist es etwa denkbar, dass der Reaktantendruck zunächst in einer ersten Verdichterstufe, zum Beispiel von Normaldruck, auf ein erstes Druckniveau erhöht wird. Zweckmäßigerweise wird der Reaktantendruck dann in einer zweiten Verdichterstufe, zum Beispiel vom ersten Druckniveau, auf ein zweites Druckniveau erhöht. Das zweite Druckniveau kann zumindest im Wesentlichen dem gewünschten Betriebsdruckniveau der Brennstoffzelle entsprechen.

Das Erhöhen des Reaktantendrucks durch eine Verdichtungsanordnung mit einem Verdichter und einem zusätzlichen Druckwellenlader ermöglicht es, ein Brennstoffzellensystem mit höherem Wirkungsgrad zu betreiben. Insbesondere kann die zur kontinuierlichen Verdichtung des Reaktanten auf ein gewünschtes Maß notwendige Leistung durch die Kombination von Verdichter und Druckwellenlader, die zweckmäßigerweise beide einen Teil der notwendigen Verdichtungsarbeit übernehmen, gegenüber der zur Verrichtung derselben Verdichtungsarbeit durch ausschließlich einen (konventionellen) Verdichter notwendigen Leistung signifikant verringert werden. Leistungseinsparungen in Höhe von wenigstens 2 %, vorzugsweise wenigstens 4 % der Brennstoffzellenleistung können realisiert werden.

Dabei wird vorzugsweise der Reaktantendruck zunächst vom Verdichter in der ersten Verdichterstufe auf das erste Druckniveau und anschließend mithilfe des Druckwellenladers in der zweiten Verdichterstufe auf das zweite Druckniveau erhöht. Hierdurch lassen sich Verdichter und/oder Druckwellenlader jeweils am effizientesten Arbeitspunkt betreiben, sodass die zur kontinuierlichen Verdichtung des Reaktanten notwendige Gesamtleistung am geringsten ist.

Grundsätzlich ist jedoch auch denkbar, dass der Reaktantendruck zunächst vom Druckwellenlader in der ersten Verdichterstufe auf das erste Druckniveau und anschließend mittels des Verdichters in der zweiten Verdichterstufe auf das zweite Druckniveau erhöht wird. Gegenüber der konventionellen Verdichtung eines Reaktanten im Zufuhrstrom zu einer Brennstoffzelle mit lediglich einem Verdichtungsschritt durch einen Verdichter kann so immer noch die zum Betrieb des Verdichters notwendige Leistung reduziert werden.

Vorzugsweise wird das im Betrieb der Brennstoffzelle entstehenden Abgas, zum Beispiel mittels der Abfuhrleitung, dem Druckwellenlader als Arbeitsmedium zur Anhebung des Reaktantendrucks zugeführt. Dies kann einen besonders effizienten Betrieb ermöglichen. Alternativ oder zusätzlich wird auch eine mit dem Verdichter gekoppelte Turbine mit dem Abgas beaufschlagt, so dass die Abgasenthalpie bevorzugt in beiden Verdichterstufen genutzt wird.

Eine besonders effiziente Verdichtung in der zweiten Verdichterstufe kann erzielt werden, indem der durch den Verdichter oder den Druckwellenlader vorverdichtete Reaktant vor einer weiteren Verdichtung gekühlt wird, etwa mittels der Kühlvorrichtung.

Besonders bevorzugt wird dem Zufuhrstrom über den Druckwellenlader gezielt Abgas der Brennstoffzelle beigemischt. Bildet der Druckwellenlader einen Teil der zweiten Verdichterstufe, d.h. ist der Druckwellenlader im Zufuhrstrom stromabwärts des Verdichters angeordnet, kann dazu das Steuergebläse eingesetzt werden. Insbesondere kann eine Leistung des Steuergebläses und/oder des Verdichters so eingestellt werden, dass gezielt Abgas aus dem Abgasstrom über den Druckwellenlader in den Zufuhrstrom gesaugt wird. Zweckmäßigerweise wird dabei die Leistung des Steuergebläses relativ zur Leistung des Verdichters erhöht. Es ist hierzu sowohl eine Anhebung der Steuergebläseleistung als auch eine Absenkung der Verdichterleistung denkbar. Folglich kann auch von einer Einstellung des Leistungsverhältnisses gesprochen werden.

Es ist somit möglich, zumindest einen Teil des Abgases über den Druckwellenlader zurück in die Brennstoffzelle zu führen, ohne dass zusätzliche, dedizierte Armaturen notwendig sind. Das so in die Brennstoffzelle zurückgeführte Abgas kann beispielsweise zur Befeuchtung einer Brennstoffzellenmembran dienen.

Alternativ oder zusätzlich kann die Beimischung des Abgases in den Zufuhrstrom aber auch durch eine Verstimmung des Druckwellenladers, etwa durch eine Verstimmung einer Drehzahl des Zellenrads des Druckwellenladers gegenüber einem drehzahlsynchronisierten Zustand, erreicht werden. Dazu kann die Drehzahl des Zellenrads um ein vorgegebenes Maß geändert werden. Alternativ oder zusätzlich kann das Abströmen von Abgas aus dem Druckwellenlader mittels der stromabwärts des Druckwellenladers angeordnete Abgasdrossel verzögert werden. Dies kann ebenfalls zur gezielten Verstimmung des Druckwellenladers genutzt werden.

Im Weiteren wird die Erfindung anhand von Figuren näher erläutert. Soweit zweckdienlich, sind hierin gleich wirkende Elemente mit gleichen Bezugszeichen versehen. Die Erfindung ist nicht auf die in den Figuren dargestellten Ausführungsbeispiele beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind alle genannten Merkmale jeweils einzeln und in beliebiger geeigneter Kombination mit dem Brennstoffzellensystem gemäß dem ersten Aspekt der Erfindung und dem Betriebsverfahren gemäß dem zweiten Aspekt der Erfindung kombinierbar.

Es zeigen, wenigstens teilweise schematisch:
- Fig. 1: ein erstes Beispiel eines Brennstoffzellensystems;
- Fig. 2: ein zweites Beispiel eines Brennstoffzellensystems; und
- Fig. 3: ein Beispiel eines Betriebsverfahrens für eine Brennstoffzelle.

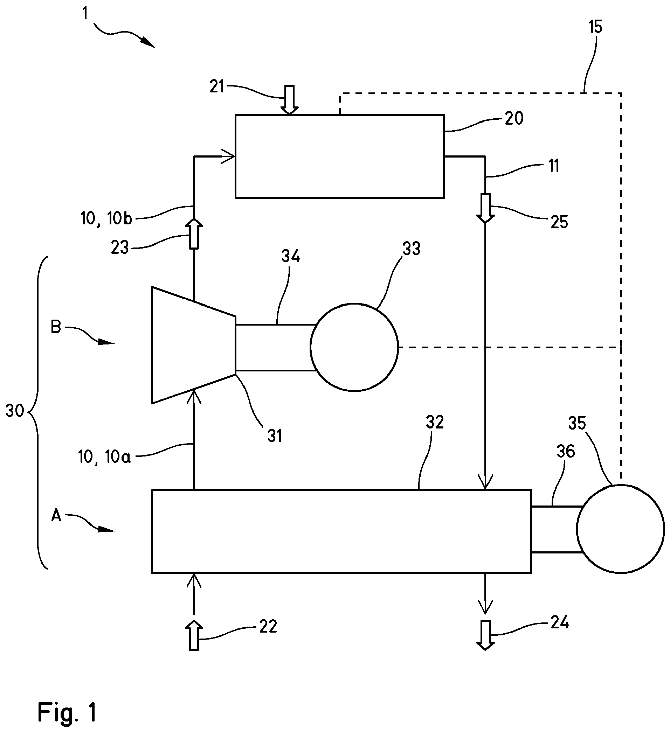

Figur 1 zeigt ein erstes Beispiel eines Brennstoffzellensystems 1 mit einer Brennstoffzelle 20 und einer Verdichtungsanordnung 30. Die Brennstoffzelle 20 ist mit einem Brennstoff 21, zum Beispiel Wasserstoff, und einem Reaktanten 22, zum Beispiel Sauerstoff, betreibbar. Die Verdichtungsanordnung 30 ist dazu eingerichtet, einen Reaktantendruck des Reaktanten 22 anzuheben. Zu diesem Zweck weist die Verdichtungsanordnung 30 einen in einem Zufuhrstrom 23 des Reaktanten 22 zur Brennstoffzelle 20 angeordneten Verdichter 31 und zusätzlich einen ebenfalls im Zufuhrstrom 23 angeordneten Druckwellenlader 32 auf. Der Druckwellenlader 32 bildet im vorliegenden Beispiel zweckmäßigerweise zumindest einen Teil einer ersten Verdichterstufe A, und der Verdichter 31 bildet zweckmäßigerweise einen Teil einer zweiten Verdichterstufe B.

In diesem Beispiel ist der Verdichter 31 zur Nachverdichtung des vom Druckwellenlader 32 bereits vorverdichteten Reaktanten 22 vorgesehen. Daher ist der Verdichter 31 im Zufuhrstrom 23 stromabwärts des Druckwellenladers 32 angeordnet.

Der Druckwellenlader 32, der Verdichter 31 und die Brennstoffzelle 20 sind zweckmäßigerweise über eine Zufuhrleitung 10 zur Versorgung der Brennstoffzelle 20 mit dem Reaktanten 22 verbunden. Die Zufuhrleitung 10 kann einen ersten Verbindungsabschnitt 10a aufweisen, welcher einen Reaktantenauslass des Druckwellenladers 32 mit einem Reaktanteneinlass des Verdichters 31 verbindet. Zusätzlich kann die Zufuhrleitung 10 einen zweiten Verbindungsabschnitt 10b aufweisen, welcher einen Reaktantenauslass des Verdichters 31 mit einem Reaktanteneinlass der Brennstoffzelle 20 verbindet. Der Druckwellenlader 32 kann so den Reaktanten 22, zum Beispiel sauerstoffhaltige Umgebungsluft, ansaugen und auf ein erstes Druckniveau verdichten. Über den ersten Verbindungsabschnitt 10a kann der derart vorverdichtete Reaktant 22 dem Verdichter 31 zugeführt werden, wo er auf ein zweites Druckniveau verdichtet wird. Über den zweiten Verbindungsabschnitt 10b kann der nun hochverdichtete Reaktant 22 der Brennstoffzelle 20 zugeführt werden.

Zum Antrieb des Verdichters 31 ist vorzugsweise ein Verdichterantrieb 33 vorgesehen. Der Verdichterantrieb 33 ist zweckmäßigerweise über eine Welle 34, bei Bedarf auch durch ein nicht dargestelltes Getriebe, mit dem Verdichter 31 gekoppelt. Beispielsweise kann der Verdichter 31 direkt an eine Motorwelle des Verdichterantriebs 33 angeschlossen sein.

Zum Antrieb des Druckwellenladers 32 ist vorzugsweise ein Druckwellenladerantrieb 35 vorgesehen. Der Druckwellenladerantrieb 35 ist zweckmäßigerweise über Welle 36, bei Bedarf auch durch ein nicht dargestelltes Getriebe, mit dem Druckwellenlader 32 gekoppelt.

Der Verdichterantrieb 33 und/oder der Druckwellenladerantieb 35 sind vorzugsweise als elektrisch betriebene Motoren ausgebildet. Bei dem Verdichterantrieb 33 und/oder dem Druckwellenladerantrieb 35 kann es sich insbesondere um Motoreinheiten des Verdichters 31 bzw. des Druckwellenladers 32 handeln. Dadurch können der Verdichter 31 bzw. der Druckwellenlader 32 bei Betrieb der Brennstoffzelle 20 freigewordene elektrische Energie zur Verdichtung des Reaktanten 22 verwenden. Insofern kann ein Teil der von der Brennstoffzelle 20 bereitgestellten Energie zur Verdichtung des Reaktanten 22 eingesetzt werden. Entsprechende (elektrische) Versorgungsleitungen 15 sind als gestrichelte Linien dargestellt.

Um die in einem beim Betrieb der Brennstoffzelle 20 entstehenden Abgas 24 enthaltene Energie, zum Beispiel dessen Druck und/oder dessen Temperatur, nutzen zu können, ist der Druckwellenlader 32 zweckmäßigerweise in einem Abgasstrom 25 des Abgases 24 angeordnet. Dazu kann die Brennstoffzelle 20 über eine Abfuhrleitung 11 mit dem Druckwellenlader 32 verbunden sein. Der Druckwellenlader 32 kann das Abgas 24 zur Verrichtung zumindest eines Teils der Verdichtungsarbeit, insbesondere zum Druckaustausch mit dem Reaktanten 22, einsetzen.

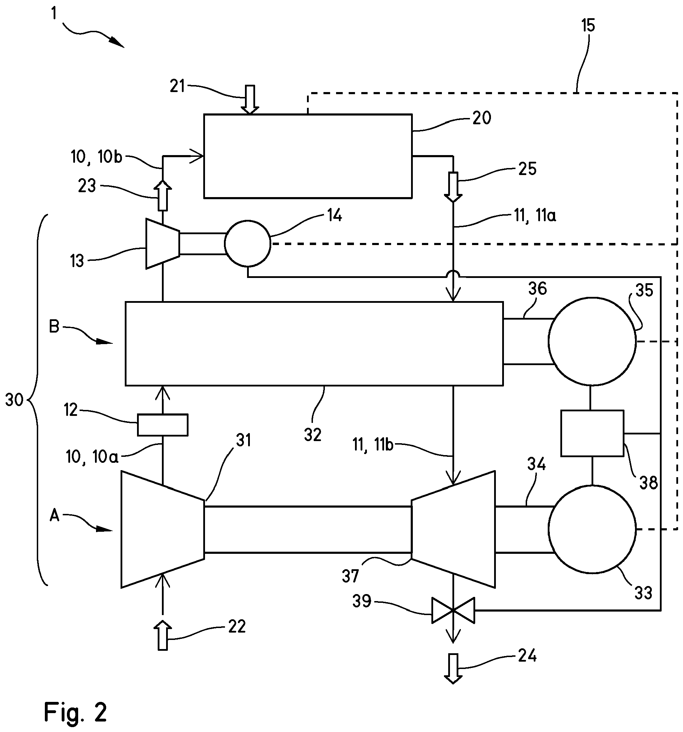

Im Zufuhrstrom 23 kann zusätzlich zum Verdichter 31 und zum Druckwellenlader 32 eine Kühlvorrichtung und/oder ein Steuergebläse (nicht gezeigt) angeordnet sein, wie im Folgenden im Zusammenhang mit Figur 2 beschrieben ist. Die Kühlvorrichtung ist hierbei vorzugsweise im ersten Verbindungsabschnitt 10a an die Zufuhrleitung 10 angeschlossen. Der Steuergebläse ist vorzugsweise im zweiten Verbindungsabschnitt 10b an die Zufuhrleitung 10 angeschlossen.

Figur 2 zeigt ein zweites Beispiel eines Brennstoffzellensystems 1 mit einer Brennstoffzelle 20 und einer Verdichtungsanordnung 30. Die Brennstoffzelle 20 ist mit einem Brennstoff 21 und einem Reaktanten 22 betreibbar. Die Verdichtungsanordnung 30 ist dazu eingerichtet, einen Reaktantendruck des Reaktanten 22 zu erhöhen. Zu diesem Zweck weist die Verdichtungsanordnung 30 einen in einem Zufuhrstrom 23 des Reaktanten 22 angeordneten Verdichter 31 und einen ebenfalls im Zufuhrstrom 23 zusätzlich angeordneten Druckwellenlader 32 auf. Zweckmäßigerweise bildet der Verdichter 31 im vorliegenden Beispiel zumindest einen Teil einer ersten Verdichterstufe A, während der Druckwellenlader 32 zumindest einen Teil einer zweiten Verdichterstufe B bilden kann.

In diesem Beispiel ist der Druckwellenlader 32 zur Nachverdichtung des vom Verdichter 31 bereits vorverdichteten Reaktanten 22 vorgesehen. Insofern ist der Druckwellenlader 32 im Zufuhrstrom 23 stromabwärts des Verdichters 31 angeordnet.

Analog zum in Figur 1 gezeigten Beispiel sind der Verdichter 31, der Druckwellenlader 32 und die Brennstoffzelle 20 über eine Zufuhrleitung 10 miteinander verbunden. Ein erster Verbindungsabschnitt 10a verbindet hier allerdings einen Reaktantenauslass des Verdichters 31 mit einem Reaktanteneinlass des Druckwellenladers 32, während der zweite Verbindungsabschnitt 10b einen Reaktantenauslass des Druckwellenladers 32 mit einem Reaktanteneinlass der Brennstoffzelle 20 verbindet. So kann in diesem Beispiel der Verdichter 31 den Reaktanten 22, zum Beispiel sauerstoffhaltige Umgebungsluft, ansaugen und auf ein erstes Druckniveau verdichten. Über den ersten Verbindungsabschnitt 10a kann der derart vorverdichtete Reaktant 22 dem Druckwellenlader 32 zugeführt werden, wo er auf ein zweites Druckniveau verdichtet wird. Über den zweiten Verbindungsabschnitt 10b kann der nun hochverdichtete Reaktant 22 der Brennstoffzelle 20 zugeführt werden.

Um sicherstellen zu können, dass der Druckwellenlader 32 in einem besonders effizienten Betriebspunkt arbeitet, ist es zweckmäßig, den thermodynamischen Zustand des Reaktanten 22 vor Eintritt in den Druckwellenlader 32 beeinflussen zu können. Daher kann eine Kühlvorrichtung 12 im Zufuhrstrom 23 stromaufwärts des Druckwellenladers 32, insbesondere im ersten Verbindungsabschnitt 10a, angeordnet sein. Mithilfe der Kühlvorrichtung 12 kann so dem Reaktanten 22 bei der Verdichtung durch den Verdichter 31 gegebenenfalls zugeführte Wärme wieder entzogen werden, bevor die Nachverdichtung durch den Druckwellenlader 32 stattfindet.

Die Kühlvorrichtung 12 kann Teil der ersten Verdichterstufe A sein. Insofern können Verdichter 31 und Kühlvorrichtung 12 derart auf einander abgestimmt sein, dass der Reaktantendruck beim Durchströmen der Kühlvorrichtung 12 das erste Druckniveau erreicht oder sich jedenfalls stromabwärts der Kühlvorrichtung 12 im ersten Leitungsabschnitt 10a auf dem ersten Druckniveau befindet.

Um bei Anlaufen des Druckwellenladers 32 die Strömungsrichtung des Reaktanten 22 in der Zufuhrleitung 10, insbesondere durch den Druckwellenlader 32, vorgeben zu können, ist ein Steuergebläse 13 im Zufuhrstrom 23 angeordnet. Zweckmäßigerweise ist das Steuergebläse 13 im Zufuhrstrom 23 stromabwärts des Druckwellenladers 32, insbesondere im zweiten Verbindungsabschnitt 10b, angeordnet. Zum Antrieb des Steuergebläses 13 ist ein Steuergebläseantrieb 14 vorgesehen, der gegebenenfalls mithilfe von im Betrieb der Brennstoffzelle 20 bereitgestellter Energie betreibbar sein kann.

Um dabei eine Beeinträchtigung des Wirkungsgrads der Brennstoffzelle 20 zu minimieren, kann die Verdichtungsleistung des Steuergebläses 13 im Vergleich zur (Gesamt-) Verdichtungsleistung des Verdichters 31 und/oder des Druckwellenladers 32 vernachlässigbar klein gehalten werden. Es ist beispielsweise bevorzugt, dass das Druckverhältnis zwischen dem Reaktantendruck stromaufwärts des Steuergebläses 13 und dem Reaktantendruck stromabwärts des Steuergebläses 13 maximal 1,1 beträgt.

Das Steuergebläse 13 kann Teil der zweiten Verdichterstufe B sein. Insofern können Druckwellenlader 32 und Steuergebläse 13 derart aufeinander abgestimmt sein oder betrieben werden, dass der Reaktantendruck beim Durchströmen des Steuergebläses 13 das zweite Druckniveau erreicht oder sich jedenfalls stromabwärts des Steuergebläses 13 auf dem zweiten Druckniveau befindet.

Alternativ oder zusätzlich kann das Steuergebläse 13, insbesondere in Verbindung mit dem Verdichter 31, aber auch zum selektiven Beimischen von Abgas 24 aus dem Abgasstrom 25 in den Zufuhrstrom 23 genutzt werden, wie weiter unten noch ausführlicher erläutert wird.

Analog zum in Figur 1 gezeigten Beispiel ist ein Verdichterantrieb 33 und/oder ein Druckwellenladerantrieb 35 mit dem Verdichter 31 bzw. dem Druckwellenlader 32 gekoppelt, zum Beispiel über eine entsprechende Welle 34, 36 und/oder ein entsprechendes, nicht dargestelltes Getriebe. Zusammen mit dem Steuergebläseantrieb 14 können der Verdichterantrieb 33 und/oder der Druckwellenladerantrieb 35 mit von der Brennstoffzelle 20 bereitgestellter Energie versorgt werden, etwa über eine (elektrische) Versorgungsleitung 15.

Der Druckwellenlader 32 ist wiederum vorteilhaft in einem Abgasstrom 25 eines Abgases 24 der Brennstoffzelle 20 angeordnet, zum Beispiel über eine Abfuhrleitung 11 mit der Brennstoffzelle 20 verbunden, damit der Druckwellenlader 32 das Abgas 24 zum Verdichten des Reaktanten 22 nutzen kann.

Eine noch umfassendere Nutzung der im Abgas 24 enthaltenen Energie kann realisiert werden, wenn eine mit dem Verdichter 31 gekoppelte Turbine 37, zum Beispiel eine Expanderturbine, im Abgasstrom 25 angeordnet ist. Dazu ist die Turbine 37 zweckmäßigerweise an die Abfuhrleitung 11 angeschlossen, insbesondere stromabwärts des Druckwellenladers 32. Beispielsweise kann die Abfuhrleitung 11 einen zweiten Verbindungabschnitt 11b aufweisen, der einen Abgasauslass des Druckwellenladers 32 mit einem Abgaseinlass der Turbine 37 verbindet. Über einen ersten Verbindungsabschnitt 11a der Abfuhrleitung 11, welcher zweckmäßigerweise einen Abgaseinlass des Druckwellenladers 32 mit einem Abgasauslass der Brennstoffzelle 20 verbindet, kann so der Abfuhrstrom 25 zunächst zum Druckaustausch mit dem Zufuhrstrom 23 durch den Druckwellenlader 32 und anschließend über den zweiten Verbindungsabschnitt 11b durch die Turbine 37 geführt werden.

Brennstoffzellen 20 weisen oftmals Elektrolytmembranen auf, welche verschiedene Elektrolyten in der Brennstoffzelle 20 voneinander trennen. Im Betrieb der Brennstoffzelle 20 müssen diese Membranen feucht gehalten, zum Beispiel mit Wasser benetzt, werden. Zu diesem Zweck weisen konventionelle Brennstoffzellen 20 oftmals aufwändige Abgasrückführungsvorrichtungen auf, mit denen Abgas, und somit darin enthaltenes Wasser oder dahin enthaltener Wasserdampf, dem Zufuhrstrom 23 beigemischt werden kann. Solche Abgasrückführungsvorrichtungen umfassen üblicherweise zumindest Ventile in der Zufuhrleitung 10 und Abfuhrleitung 11, Aktuatoren zur Betätigung dieser Ventile sowie Druckausgleichspumpen zum Ausgleichen eines Druckunterschieds zwischen Abgas 24 und Reaktant 22.

Im vorliegenden Beispiel kann eine vorbestimmte Menge an Abgas 24 dem Zufuhrstrom 23 mithilfe des Druckwellenladers 32 beigemischt werden. Dazu ist vorzugsweise eine Steuerungsvorrichtung 38 vorgesehen, welche dazu eingerichtet ist, den Druckwellenlader 32 zum Beimischen von Abgas 24 in den Zufuhrstrom 23 zu veranlassen. Die Steuerungsvorrichtung 38 kann insbesondere dazu eingerichtet sein, eine Drehzahl eines Zellenrads des Druckwellenladers (32) gegenüber einem oben näher erläuterten drehzahlsynchronisierten Zustand zu verstimmen.

Eine solche Verstimmung kann durch Ändern der Drehzahl des Zellenrads des Druckwellenladers 32 erzielt werden. Insofern ist die Steuerungsvorrichtung vorzugsweise dazu eingerichtet, die Drehzahl des Zellenrads zu ändern. Hierfür ist die Steuerungsvorrichtung 38 zweckmäßigerweise mit dem Druckwellenladerantrieb 35 signal- oder datenverbunden.

Alternativ oder zusätzlich kann eine solche Verstimmung auch durch Drosselung des Abfuhrstroms 25 erzielt werden, sodass ein Rückstau bis in den Druckwellenlader 32 entsteht. Insofern ist vorzugsweise eine Abgasdrossel 39 im Zufuhrstrom 25 stromabwärts des Druckwellenladers 32 angeordnet. Die Steuerungsvorrichtung 38 ist zweckmäßigerweise mit der Abgasdrossel 39 oder einem Aktuator zur Betätigung der Abgasdrossel 39 signal- oder datenverbunden und dazu eingerichtet, die Abgasdrossel 39 derart zu betätigen oder eine Betätigung zu veranlassen, dass eine vorbestimmte Menge an Abgas 24 dem Zufuhrstrom 23 beigemischt wird.

Gegebenenfalls noch einfacher als eine Verstimmung des Druckwellenladers 32 bzw. dessen Zellrads ist eine Verstimmung des Leistungsverhältnisses zwischen Steuergebläse 13 und Verdichter 31. Die gezielte Beimischung von Abgas 24 in den Zufuhrstrom 25 lässt sich beispielsweise auch dadurch erreichen, dass die Leistung des Steuergebläses 13, also dessen Fördermenge (pro Zeiteinheit), gegenüber der Leistung des Verdichters 31, also dessen Fördermenge (pro Zeiteinheit), erhöht wird. Infolge dessen wird Abgas 24 durch den Druckwellenlader 32 in den Zufuhrstrom 25 beigemischt.

Folglich ist die Steuerungsvorrichtung 38 alternativ oder zusätzlich zur Abgasdrossel 39 und/oder dem Druckwellenladerantrieb 35 zweckmäßigerweise mit dem Steuergebläse 13, insbesondere dem Steuergebläseantrieb 14, und/oder mit dem Verdichter 31, insbesondere mit dem Verdichterantrieb 33, signal- oder datenverbunden und dazu eingerichtet, die Leistung des Steuergebläses 13 und/oder des Verdichters 31, bzw. deren Antriebe 14, 33 derart einzustellen oder eine derartige Einstellung zu veranlassen, dass eine vorbestimmte Menge an Abgas 24 dem Zufuhrstrom 23 beigemischt wird.

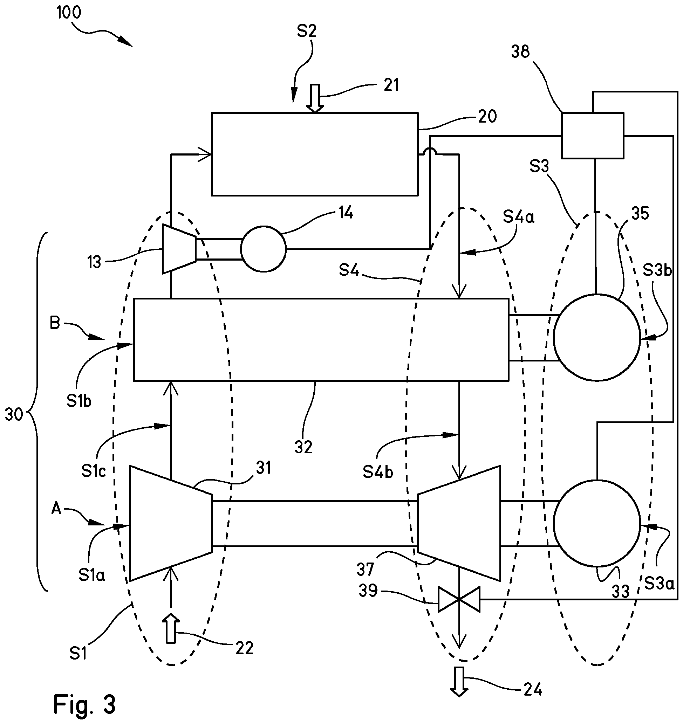

Figur 3 zeigt ein Beispiel eines Betriebsverfahrens 100 für eine Brennstoffzelle 20. In einem Verfahrensschritt S1 wird ein Reaktantendruck eines Reaktanten 22 in einem Zufuhrstrom zur Brennstoffzelle 20 mittels einer Verdichtungsanordnung 30 erhöht. Dazu weist die Verdichtungsanordnung 30 einen im Zufuhrstrom angeordneten Verdichter 31 und zusätzlich einen im Zufuhrstrom angeordneten Druckwellenlader 32 auf.

Vorzugsweise wird der Reaktantendruck mittels der Verdichtungsanordnung 30 schrittweise erhöht. Beispielsweise kann der Reaktantendruck in einem Verfahrensschritt S1a in einer ersten Verdichterstufe A der Verdichtungsanordnung 30 auf ein erstes Druckniveau erhöht werden, bevor er in einem Verfahrensschritt S1b auf ein zweites Druckniveau, welches höher ist als das erste Druckniveau, erhöht wird.

Beispielsweise kann der Reaktantendruck in Verfahrensschritt S1a auf ein erstes Druckniveau von wenigstens 1 bar, vorzugsweise wenigstens 1,5 bar, besonders bevorzugt etwa 1,8 bar, erhöht werden. Dabei ist es vorteilhaft, den Reaktantendruck im Verfahrensschritt S1a auf höchstens 2,2 bar, vorzugsweise höchstens 2 bar, anzuheben. Dadurch kann die in Verfahrensschritt S1a anfallende Verdichtungsarbeit begrenzt werden.

Alternativ oder zusätzlich kann der Reaktantendruck in Verfahrensschritt S1b auf ein zweites Druckniveau von wenigstens 2 bar, vorzugsweise wenigstens 2,2 bar, besonders bevorzugt etwa 2,4 bar, erhöht werden. Dabei ist es vorteilhaft, den Reaktantendruck im Verfahrensschritt S1b auf höchstens 2,8 bar, vorzugsweise höchstens 2,6 bar, anzuheben. Dadurch kann die in Verfahrensschritt S1b anfallende Verdichtungsarbeit begrenzt werden.

Durch das Aufteilen der Verdichtung des Reaktanten 22 auf die Verfahrensschritte S1a und S1b kann der Verdichter 31 und/oder der Druckwellenlader 32 in einem Betriebspunkt, in dem mit maximaler Effizienz gearbeitet wird, betrieben werden.

Der Verdichter 31 kann beispielsweise besonders effizient betrieben werden, wenn er den Reaktanten 22 von einem Umgebungsdruck (Normaldruck) auf höchstens 2,2 bar verdichtet. Mit anderen Worten ist der Wirkungsgrad des Verdichters 31, das heißt das Verhältnis geleisteter Verdichtungsarbeit zur zum Antrieb des Verdichters 31 aufgewandten Leistung, besonders groß, wenn der Verdichter 31 in einem Niederdruckbereich von weniger als 2,2 bar eingesetzt wird. Als zum Antrieb des Verdichters 31 aufgewandte Leistung kann dabei beispielsweise eine von einem Verdichterantrieb 33 verbrauchte Leistung herangezogen werden. Daher ist der Verdichter 31 vorzugsweise im Zufuhrstrom stromaufwärts des Druckwellenladers 32 angeordnet, sodass er beispielsweise zumindest einen Teil der ersten Verdichterstufe A bildet. Die Leistungsaufnahme eines Verdichterantriebs 33 bleibt dabei verhältnismäßig klein, zum Beispiel bei etwa 6 kW (verglichen mit einer Leistungsaufnahme von 11 kW bei einer Verdichtung bis auf 2,4 bar zum Betrieb einer 100 kW-Brennstoffzelle).

Der Druckwellenlader 32 verrichtet die Verdichtungsarbeit zumindest größtenteils durch Druckaustausch, das heißt durch ein Übertragen eines Drucks eines Arbeitsmediums auf den Reaktanten 22. Daher ist eine zum Antrieb des Druckwellenladers 32 aufgewandte Leistung, beispielsweise eine von einem Druckwellenladerantrieb 35 verbrauchte Leistung, im Wesentlichen unabhängig von den Drücken, bei denen der Druckwellenlader 32 arbeitet. Deshalb ist der Druckwellenlader 32 vorzugsweise im Zufuhrstrom stromabwärts des Verdichters 31 angeordnet, sodass er beispielsweise zumindest einen Teil der zweiten Verdichterstufe B bildet.

Grundsätzlich ist allerdings auch eine Anhebung des Reaktantendrucks durch Vorverdichtung mithilfe des Druckwellenladers und anschließend durch Nachverdichtung mithilfe des Verdichters denkbar. Insofern kann also der Reaktantendruck durch den Druckwellenlader auf das erste Druckniveau und durch den Verdichter auf das zweite, höhere Druckniveau angehoben werden. Auch hierbei können noch Effizienzgewinne gegenüber konventionellen Brennstoffzellensystemen, bei denen ein konventioneller Verdichter die gesamte Verdichtungsarbeit leistet, erzielt werden.

Wie effizient der Druckwellenlader 32 arbeitet, ist vor allem eine Frage der thermodynamischen Zustände des Reaktanten 22 beim Eintritt in den Druckwellenlader 32 einerseits und des Arbeitsmediums beim Eintritt in den Druckwellenlader 32 andererseits. Daher kann es vorteilhaft sein, in einem Verfahrensschritt S1c den thermodynamischen Zustand des Reaktanten 22 nach Ausströmen aus dem Verdichter 31 zu beeinflussen. Denkbar ist beispielsweise eine Kühlung des Zufuhrstroms vor Eintritt in den Druckwellenlader 32, etwa mittels einer im Zufuhrstrom zwischen dem Verdichter 31 und dem Druckwellenlader 32 angeordneten, der besseren Übersichtlichkeit wegen in Figur 3 nicht dargestellten Kühlvorrichtung.

Eine solche Kühlung des Zufuhrstroms kann aber auch vorteilhaft sein, wenn der Druckwellenlader 32 die Vorverdichtung übernimmt. Insofern ist auch eine Kühlung des Zufuhrstroms vor Eintritt in den Verdichter 31 denkbar.

In einem Verfahrensschritt S2 wird der Reaktant 22 mit durch die Verdichtungsanordnung 30 angehobenem Reaktantendruck in die Brennstoffzelle 20 eingespeist. Zweckmäßigerweise wird in Verfahrensschritt S2 auch ein Brennstoff 21 in die Brennstoffzelle 20 eingespeist, sodass der Brennstoff 21, etwa Wasserstoff, an einer als Katode fungierenden Elektrode oxidiert und der Reaktant 22, beispielsweise Sauerstoff, an einer als Anode fungierenden Elektrode reduziert werden kann. Die dabei frei werdende elektrische Energie wird vorzugsweise in einem Verfahrensschritt S3 zum Betrieb der Verdichtungsanordnung 30, insbesondere in einem Verfahrensschritt S3a zum Betrieb des Verdichters 31 und/oder in einem Verfahrensschritt S3b zum Betrieb des Druckwellenladers 32, eingesetzt.

Oxidierte Teile des Brennstoffs 21 und reduzierte Teile des Reaktanten 22 können sich zu einem Abgas 24 verbinden. Das Abgas 24 wird vorzugsweise in einem Verfahrensschritt S4 aus der Brennstoffzelle 20 abgeführt. Dabei kann es vorteilhaft in einem Verfahrensschritt S4a dem Druckwellenlader 32 zugeführt werden, damit dieser das Abgas 24 zur Verdichtung des Reaktanten 22, zum Beispiel in Verfahrensschritt S1b, nutzen kann. Mit anderen Worten kann das Abgas 24 dem Druckwellenlader 32 als Arbeitsmedium zur Verdichtung des Reaktanten 22 zugeführt werden. Das bedeutet, dass zum Betrieb des Druckwellenladers 32 vorzugsweise das Abgas 24 der Brennstoffzelle 20 eingesetzt wird.

Da aufgrund der Arbeitsweise (Druckaustausch) des Druckwellenladers 32 der Druck des Abgases 24 im Druckwellenlader 32 bei der Verdichtung des Reaktanten 22 nicht unter den Reaktantendruck, zum Beispiel 2,4 bar, fallen kann, weist das Abgas 24 nach Austritt aus dem Druckwellenlader 32 immer noch nutzbare Energie, insbesondere Druck und/oder Temperatur, auf. Deshalb wird das Abgas 24 vorzugsweise in einem Verfahrensschritt S4b einer mit dem Verdichter 31 gekoppelten Turbine 37 zugeführt. Die Turbine 37 kann dadurch die nach Austritt aus dem Druckwellenlader 32 im Abgas 24 enthaltene Energie zumindest teilweise zum Antrieb des Verdichters 31 nutzen. Auf diese Weise kann die im Abgas 24 enthaltene Energie zumindest teilweise zur Verdichtung des Reaktanten 22 durch den Verdichter 31, insbesondere zur Unterstützung des Verdichterantriebs 33, eingesetzt werden. Folglich lässt sich die dem Verdichterantrieb 33 in Verfahrensschritt S3a zugeführte, von der Brennstoffzelle 20 erzeugte Energie reduzieren.

Unter Umständen ist es vorteilhaft, dem Zufuhrstrom eine vorgegebene Menge an Abgas 24 beizumischen. Ist das Abgas 24 wasserhaltig, kann somit beispielsweise ein Feuchtigkeitsgehalt im Zufuhrstrom und letztlich auch in der Brennstoffzelle 20 gesteuert, insbesondere reguliert, werden.

Die Beimischung des Abgases 24 erfolgt vorzugsweise über den Druckwellenlader 32. In diesem Fall kann die Beimischung des Abgases 24 im Verfahrensschritt S1a oder S1b erfolgen, je nachdem, ob der Druckwellenlader 32 den Reaktanten 22 vor- oder nachverdichtet.

In einer bevorzugten Variante wird zu diesem Zweck die Leistung, und damit die pro Zeiteinheit geförderte Menge an Reaktant 22, eines im Zufuhrstrom 25 stromabwärts des Druckwellenladers 32 angeordneten Steuergebläses 13 gegenüber der Leistung, und damit der pro Zeiteinheit geförderten Menge an Reaktant 22, des Verdichters 31 angehoben. Dies kann beispielsweise über eine Erhöhung der Antriebsleistung eines Steuergebläseantriebs 14 erfolgen. Alternativ oder zusätzlich kann auch die Leistung des Verdichters 31 bzw. eines Verdichterantriebs 33 verringert werden. Es hat sich gezeigt, dass die gegenüber der Förderung des Reaktanten 22 stromaufwärts des Druckwellenladers 32 erhöhte Förderung des Reaktanten 22 stromabwärts des Druckwellenladers 32 zu einem gezielten Beimischen von Abgas 24 aus dem Druckwellenlader 32 in den Zufuhrstrom 25 führen kann. Über die Regelung der Leistung des Steuergebläses 13 und/oder des Verdichters 31 bzw. deren jeweiligem Antrieb 14, 33 kann infolgedessen eine Zirkulation von Abgas 24 im Hochdruckbereich, d. h. in der zweiten Hochdruckstrufe B und der Brennstoffzelle 20, erreicht werden. Die Leistung des Steuergebläses 13 und/oder des Verdichters 33 bzw. deren jeweiligem Antrieb 14, 33, insbesondere das Leistungsverhältnis zwischen Steuergebläse 13 und Verdichter 31 im Hinblick auf die Fördermenge (pro Zeiteinheit), kann hierbei als Regelgröße dienen.

Alternativ oder zusätzlich kann zum gezielten Beimischen von Abgas 24 in den Zufuhrstrom 25 aber auch eine Drehzahl des Zellenrads des Druckwellenladers 32 gegenüber einem drehzahlsynchronisierten Zustand derart verstimmt werden, dass eine vorbestimmte Menge an Abgas 24 zusammen mit dem verdichteten Reaktanten 22 aus dem Zellenrad ausströmt.

Eine derartige Verstimmung lässt sich zum Beispiel erreichen, indem die Drehzahl des Zellenrads - bei ansonsten konstanten Betriebsparametern des Druckwellenladers 32 - geändert wird. Hierzu kann der Druckwellenladerantrieb 35 entsprechend angesteuert werden, etwa von einer Steuerungsvorrichtung 38.

Alternativ oder zusätzlich lässt sich eine derartige Verstimmung auch erreichen, indem ein Ausströmen des Abgases 24 aus dem Druckwellenlader 32 verzögert wird. Hierzu kann beispielsweise der Abfuhrstrom stromabwärts des Druckwellenlader 32 gedrosselt werden, etwa durch entsprechende Ansteuerung einer stromabwärts des Druckwellenladers 32 im Abfuhrstrom angeordnete Abgasdrossel 39. Die Ansteuerung der Abgasdrossel 39 kann ebenfalls von der Steuerungsvorrichtung 38 vorgenommen werden.

Ist der Verdichter 31, anders als in Figur 3 gezeigt, im Zufuhrstrom 25 stromabwärts des Druckwellenladers 32 angeordnet, kann die Verstimmung des Zellenrads des Druckwellenladers 32 die einzige Möglichkeit sein, die Beimischung von Abgas 24 in den Zufuhrstrom 25 über den Druckwellenlader zu realisieren. Ist jedoch der Druckwellenlader 32 wie im vorliegenden Beispiel im Zufuhrstrom 25 stromabwärts des Verdichters 31 angeordnet, kann die Verstimmung des Zellrads mit der Regelung der Leistungen des Steuergebläses 13 und/oder des Verdichters 31 kombiniert und gegebenenfalls zur Feinabstimmung der dem Zufuhrstrom 25 beizumischenden Abgasmenge genutzt werden.

### Bezugszeichenliste

- 1: Brennstoffzellensystem

- 10: Zufuhrleitung
- 10a: erster Verbindungsabschnitt
- 10b: zweiter Verbindungsabschnitt
- 11: Abfuhrleitung
- 11a: erster Verbindungsabschnitt
- 11b: zweiter Verbindungsabschnitt
- 12: Kühlvorrichtung
- 13: Steuergebläse
- 14: Steuergebläseantrieb
- 15: Versorgungsleitung

- 20: Brennstoffzelle
- 21: Brennstoff
- 22: Reaktant
- 23: Zufuhrstrom
- 24: Abgas
- 25: Abfuhrstrom

- 30: Verdichtungsanordnung
- 31: Verdichter
- 32: Druckwellenlader
- 33: Verdichterantrieb
- 34: Welle
- 35: Druckwellenladerantrieb
- 36: Welle
- 37: Turbine
- 38: Steuerungsvorrichtung
- 39: Abgasdrossel
- 100: Verfahren
- S1-S4: Verfahrensschritte

- A: erste Verdichterstufe
- B: zweite Verdichterstufe

## Patentansprüche

1. Brennstoffzellensystem (1), aufweisend:
- eine mit einem Brennstoff (21) und einem Reaktanten (22) betreibbare Brennstoffzelle (20); und
- eine Verdichtungsanordnung (30), die dazu eingerichtet ist, einen Reaktantendruck des Reaktanten (22) anzuheben, wobei die Verdichtungsanordnung (30) einen in einem Zufuhrstrom (23) des Reaktanten (22) zur Brennstoffzelle (20) angeordneten Verdichter (31) aufweist,
**dadurch gekennzeichnet,**
- **dass** die Verdichtungsanordnung (30) zusätzlich einen im Zufuhrstrom (23) angeordneten Druckwellenlader (32) aufweist.

2. Brennstoffzellensystem (1) nach Anspruch 1,
**gekennzeichnet durch**
eine erste Verdichterstufe (A), die zum Anheben des Reaktantendrucks auf ein erstes Druckniveau eingerichtet ist, und eine zweite Verdichterstufe (B), die zum Anheben den Reaktantendrucks auf ein zweites Druckniveau, das höher ist als das erste Druckniveau, eingerichtet ist.

3. Brennstoffzellensystem (1) nach einem der Anspruch 2,
**dadurch gekennzeichnet,**
- **dass** der Druckwellenlader (32) Teil der ersten Verdichterstufe (A) zum Anheben des Reaktantendrucks auf das erste Druckniveau ist; und
- **dass** der Verdichter (31) Teil der zweiten Verdichterstufe (B) zum Anheben des Reaktantendrucks auf das zweite Druckniveau ist.

4. Brennstoffzellensystem (1) nach Anspruch 2,
**dadurch gekennzeichnet,**
- **dass** der Verdichter (31) Teil der ersten Verdichterstufe (A) zum Anheben des Reaktantendrucks auf das erste Druckniveau ist; und
- **dass** der Druckwellenlader (32) Teil der zweiten Verdichterstufe (B) zum Anheben des Reaktantendrucks auf das zweite Druckniveau, welches höher ist als das erste Druckniveau, ist.

5. Brennstoffzellensystem (1) nach einem der vorangehenden Ansprüche,
**gekennzeichnet durch** eine Abfuhrleitung (11) zum Abführen eines im Betrieb der Brennstoffzelle (20) entstehenden Abgases (24), wobei mittels der Abfuhrleitung (11) das Abgas (24) dem Druckwellenlader (32) als Arbeitsmedium zur Anhebung des Reaktantendrucks zuführbar ist.

6. Brennstoffzellensystem (1) nach einem der vorangehenden Ansprüche,
**gekennzeichnet durch** eine mit Abgas (24) der Brennstoffzelle (20) beaufschlagbare Turbine (37), welche derart mit dem Verdichter (31) gekoppelt ist, dass der Verdichter (31) mittels der Turbine (37) antreibbar ist.

7. Brennstoffzellensystem (1) nach einem der vorangehenden Ansprüche,
**gekennzeichnet durch** eine im Zufuhrstrom (23) angeordnete Kühlvorrichtung (12), welche dazu eingerichtet ist, den **durch** den Verdichter (31) oder den Druckwellenlader (32) vorverdichteten Reaktanten (22) vor einer weiteren Verdichtung zu kühlen.

8. Brennstoffzellensystem (1) nach einem der vorangehenden Ansprüche,
**gekennzeichnet durch** ein im Zufuhrstrom (23) angeordnetes Steuergebläse (13), welches zum Beeinflussen des Zufuhrstroms (23) zwischen dem Druckwellenlader (32) und der Brennstoffzelle (20) eingerichtet ist.

9. Brennstoffzellensystem (1) nach einem der vorangehenden Ansprüche,
**gekennzeichnet durch** eine Steuerungsvorrichtung (38), die dazu eingerichtet ist, den Druckwellenlader (32) und/oder das Steuergebläse (13) und/oder den Verdichter (31) zum selektiven Beimischen von Abgas (24) der Brennstoffzelle (20) in den Zufuhrstrom (23) zu veranlassen.

10. Brennstoffzellensystem (1) nach Anspruch 9,
**dadurch gekennzeichnet,**
**dass** die Steuerungsvorrichtung (38) dazu eingerichtet ist, eine Leistung des Steuergebläses (13) und/oder des Verdichters (31) derart einzustellen, dass gezielt Abgas (24) aus dem Abgasstrom (25) über den Druckwellenlader (32) in den Zufuhrstrom (23) beigemischt wird.

11. Brennstoffzellensystem (1) nach Anspruch 9 oder 10,
**dadurch gekennzeichnet,**
**dass** die Steuerungsvorrichtung (38) dazu eingerichtet ist, eine Drehzahl eines Zellenrads des Druckwellenladers (32) gegenüber einem drehzahlsynchronisierten Zustand zu verstimmen.

12. Brennstoffzellensystem (1) nach Anspruch 11,
**dadurch gekennzeichnet,**
**dass** die Steuerungsvorrichtung (38) zum Ändern einer Drehzahl eines Zellenrads des Druckwellenladers (32) um ein vorgegebenes Maß eingerichtet ist.

13. Brennstoffzellensystem (1) nach Anspruch 11 oder 12,
**gekennzeichnet durch**
eine in einem Abfuhrstrom (25) des Abgases (24) stromabwärts des Druckwellenladers (32) angeordnete Abgasdrossel (39), wobei die Steuerungsvorrichtung (38) zum Drosseln des Abfuhrstroms (25) mithilfe der Abgasdrossel (39) eingerichtet ist.

14. Brennstoffzellensystem (1) nach einem der Ansprüche 2 bis 13,
**dadurch gekennzeichnet**
- **dass** die erste Verdichterstufe (A) dazu eingerichtet ist, den Reaktantendruck auf ein erstes Druckniveau zwischen 1 bar und 2,2 bar, vorzugsweise zwischen 1,5 bar und 2 bar, besonders bevorzugt etwa 1,8 bar, anzuheben; und
- die zweite Verdichterstufe (B) dazu eingerichtet ist, den Reaktantendruck auf ein zweites Druckniveau zwischen 2,0 bar und 2,8 bar, vorzugsweise zwischen 2,2 bar und 2,6 bar, besonders bevorzugt etwa 2,4 bar, anzuheben.

15. Betriebsverfahren (100) für eine Brennstoffzelle (2), bei welchem ein Reaktantendruck eines Reaktanten (22) in einem Zufuhrstrom (23) zu einer Brennstoffzelle (20) mittels einer Verdichtungsanordnung (30), welche einen im Zufuhrstrom (23) angeordneten Verdichter (31) und zusätzlich einen im Zufuhrstrom (23) angeordneten Druckwellenlader (32) aufweist, erhöht wird (S1).
